# EUROPEAN PATENT APPLICATION

(11) **EP 2 783 956 A1**
(43) Date of publication of application: **01.10.2014**
(21) Application number: 14161393.5
(22) Date of filing: 25.03.2014
(51) Int. Cl.: B62J 9/00, B62J 11/00, B60L 11/18

(54) **Rear fender support structure for saddle type vehicle**

(30) Priority: 29.03.2013 JP 2013075179
(71) Applicant: Honda Motor Co., Ltd., Tokyo 107-8556 (JP)
(72) Inventor: Shinde, Yasuo, Saitama, 351-0193 (JP); Takizawa, Kota, Saitama, 351-0193 (JP)
(74) Representative: Ahner, Philippe

(57) **Abstract**

The invention relates to a rear fender support structure for a saddle type vehicle which makes it possible to contrive a reduction in the weight of a rear fender while adopting a configuration wherein a battery is disposed rearwardly of a storage box. The rear fender support structure for the saddle type vehicle includes: seat rails 14 which form a rear portion of a body frame and support a seat either directly or indirectly; a rear fender 69 covering at least the upper side of a rear wheel WR; and a battery 151 disposed on the upper side of the rear fender 69. The rear fender support structure for the saddle type vehicle includes a battery stay which covers at least a part of the battery 151 and holds the battery 151. The battery stay is fixed to the seat rails 14.

## Description

### Technical Field

The present invention relates to a rear fender support structure for a saddle type vehicle in which a battery is disposed rearwardly of a storage box.

### Background Art

Conventionally, in saddle type vehicles such as scooter type motorcycle, there has been known a configuration in which a battery is disposed rearwardly of a storage box. In such a configuration, the battery is supported on an upper surface of a rear fender (see, for example, Patent Document 1).

### Prior Art Document

[Patent Document 1] Japanese Patent Laid-Open No. Hei 7-25375

### Summary of the Invention

### [Problem to Be Solved by the Invention]

In the rear fender support structure for a saddle type vehicle described in Patent Document 1, however, the battery is supported on the upper surface of the rear fender, and, therefore, it has been necessary to enhance the strength and rigidity of the rear fender. Accordingly, it has been difficult to contrive a reduction in the weight of the rear fender.

It is an object of the present invention to provide a rear fender support structure for a saddle type vehicle that makes it possible to contrive a reduction in the weight of a rear fender in a configuration in which a battery is disposed rearwardly of a storage box.

### [Means for Solving the Problem]

According to an invention described in claim 1, there is provided a rear fender support structure for a saddle type vehicle which includes seat rails forming a rear portion of a body frame, the seat rails supporting a seat either directly or indirectly, a rear fender covering at least an upper side of a rear wheel, and a battery disposed on an upper side of the rear fender. The rear fender support structure is characterized by including a battery stay covering at least a part of the battery, the battery stay holding the battery, the battery stay being fixed to the seat rails.

According to an invention described in claim 2, the above-mentioned rear fender support structure is characterized in that the rear fender is fixed to a rear part stay extending from the seat rails, and the battery stay is fixed to the rear part stay.

According to an invention described in claim 3, the above-mentioned rear fender support structure is characterized in that the rear fender includes a base part, and a rear extension part extending from the base part, the rear extension part functioning as a mudguard, and a rear portion of the base part is fastened to the battery stay.

According to an invention described in claim 4, the above-mentioned rear fender support structure is characterized in that the rear part stay is connected to a cross member provided at a rear portion to mutually fasten the seat rails formed in a left-right pair, and is provided at a vehicle-width-directional center.

According to an invention described in claim 5, the above-mentioned rear fender support structure is characterized in that the battery stay is so provided as to position the battery in a front-rear direction and in a left-right direction, and the rear fender has a contact part making contact with a lower surface of the battery.

According to an invention described in claim 6, the above-mentioned rear fender support structure is characterized in that the seat rails are formed in a left-right pair, a cushion support part which supports a rear cushion supporting the rear wheel elastically is provided on one side of the seat rails, and a fixing part for fixing the battery stay is provided on the other side of the seat rails.

According to an invention described in claim 7, the above-mentioned rear fender support structure is characterized in that the seat rails are formed to extend upward and rearward, and a front portion of the rear fender is fastened to the seat rails on both left and right sides.

### [Effects of the Invention]

According to the invention in claim 1, the rear fender support structure for a saddle type vehicle includes the battery stay covering at least a part of the battery and holding the battery, and the battery stay is fixed to the seat rails. Therefore, it is unnecessary to support the battery stay by the rear fender. Accordingly, the strength and rigidity required for mounting the battery on the rear fender can be reduced, and a reduction in the weight of the rear fender can be contrived.

According to the invention in claim 2, the rear fender is fixed to the rear part stay extending from the seat rails, and the battery stay is fixed to the rear part stay. Therefore, instead of reinforcing the rear part stay to support the battery thereby, it is possible to reinforce the rear part stay with the battery stay. Consequently, a reduction in the weight of the rear part stay can be promised.

According to the invention in claim 3, a rear portion of the base part is fastened to the battery stay. This eliminates the need to provide a stay for fixing the rear portion of the base part. Therefore, any stay for fixing the rear portion of the base part is not provided, and weight can be reduced that much.

According to the invention in claim 4, the rear part stay is connected to the cross member provided at a rear portion to mutually fasten the seat rails formed in a left-right pair, and is provided at the vehicle-width-directional center. Therefore, the rear fender can be fixed while securing a left-right balance by the rear part stay provided in the vehicle-width-directional center. As a result, it is possible to reduce the number of locations in which the rear fender is fixed, and to enhance productivity.

According to the invention in claim 5, the battery stay is so provided as to position the battery in the front-rear direction and in the left-right direction. In addition, the rear fender has the contact part for making contact with the lower surface of the battery. Therefore, it is possible to bear only the downward load of the battery by the rear fender, to bear the front-rear-directional and left-right-directional loads of the battery by the battery stay, and thereby to share the loads of the battery between the rear fender and the battery stay. This makes it possible to contrive optimization of the rigidities of the battery stay and the rear fender, and to achieve a reduction in the overall weight.

According to the invention in claim 6, the seat rails are formed in a left-right pair. In addition, the cushion support part which supports the rear cushion supporting the rear wheel elastically is provided on one side of the seat rails. Further, the fixing part for fixing the battery stay is provided on the other side of the seat rails. Therefore, it is possible to bear loads by the pair of left and right seat rails in a sharing manner. Consequently, while optimizing the rigidity balance as to the seat rails, it is possible to fix accessories through utilization of the respective rigidities of them. As a result, a reduction in weight can be contrived while realizing enhanced vehicle performance.

According to the invention in claim 7, the seat rails are formed to extend upward and rearward. In addition, the front portion of the rear fender is fastened to the seat rails on both left and right sides. Therefore, both left and right sides of the rear fender can be fixed by fastening them to the seat rails at a low level of the seat rails. This permits a fastening member or members to be formed without enlargement in size. Consequently, a reduction in weight can be promised.

### Brief Description of the Drawings

FIG. 1 is a left side view of a motorcycle 1 as a saddle type vehicle according to a first embodiment of the present invention.
FIG. 2 is a left side view of a rear portion of the motorcycle 1.
FIG. 3 is an enlarged sectional view of a grip part of the motorcycle 1.
FIG. 4 is an enlarged sectional view of the grip part of the motorcycle 1.
FIG. 5 is a plan view showing a state wherein a seat 27 has been detached from a rear portion of the motorcycle 1.
FIG. 6 is a plan view showing a state wherein the seat 27 and a rear side cover 67 have been detached from a rear portion of the motorcycle 1.
FIG. 7 is a left side view of a storage box 810 of the motorcycle 1.
FIG. 8 is a bottom view of the storage box 810 of the motorcycle 1.
FIG. 9 is a sectional view taken along line A-A of FIG. 5.
FIG. 10 is a lower-side perspective view of the storage box 810 of the motorcycle 1.
FIG. 11 is a left side view showing a state wherein the rear side cover 67, a taillight unit 840, a carrier 850 and the like have been detached from a rear portion of the motorcycle 1.
FIG. 12 is a right side view showing the state wherein the rear side cover 67, the taillight unit 840, the carrier 850 and the like have been detached from the rear portion of the motorcycle 1.
FIG. 13 is an enlarged sectional view of a battery 151 and its surroundings in the motorcycle 1.
FIG. 14 is an enlarged sectional view, taken at a vehicle-width-directionally central position, showing the battery 151 and its surroundings in the motorcycle 1.
FIG. 15 is an enlarged sectional view, taken on the right side of the vehicle, showing the battery 151 and its surroundings in the motorcycle 1.
FIG. 16 is a back elevation of the battery 151 and its surroundings in the motorcycle 1.
FIG. 17 illustrates a battery stay 152 for holding the battery 151 of the motorcycle 1, wherein (a) is a front view, (b) is a left side view, and (c) is a bottom view.
FIG. 18 is a perspective view showing a state wherein the seat 27, the rear side cover 67, the storage box 810 and the like have been detached from a rear portion of the motorcycle 1.
FIG. 19 is a plan view showing the state wherein the seat 27, the rear side cover 67, the storage box 810 and the like have been detached from the rear portion of the motorcycle 1.
FIG. 20 is a back elevation of the carrier 850 and its surroundings in the motorcycle 1.
FIG. 21 is a perspective view showing a state wherein the seat 27 has been detached from a rear portion of the motorcycle 1.
FIG. 22 is a back elevation showing a state wherein a rear center cover 855 has been detached from a rear portion of the motorcycle 1.
FIG. 23 is an enlarged sectional view of a carrier fastening structure in the motorcycle 1.
FIG. 24 is an upper-side perspective view of the rear center cover 855 constituting the carrier fastening structure in the motorcycle 1.
FIG. 25 is a lower-side perspective view of the rear center cover 855 constituting the carrier fastening structure in the motorcycle 1.
FIG. 26 is a sectional view taken along line a-a of FIG. 2.
FIG. 27 is an enlarged sectional view, taken at a central position with respect to the left-right direction of the vehicle, showing a battery 151 and its surroundings in a motorcycle 1 according to a second embodiment.

### Modes for Carrying Out the Invention

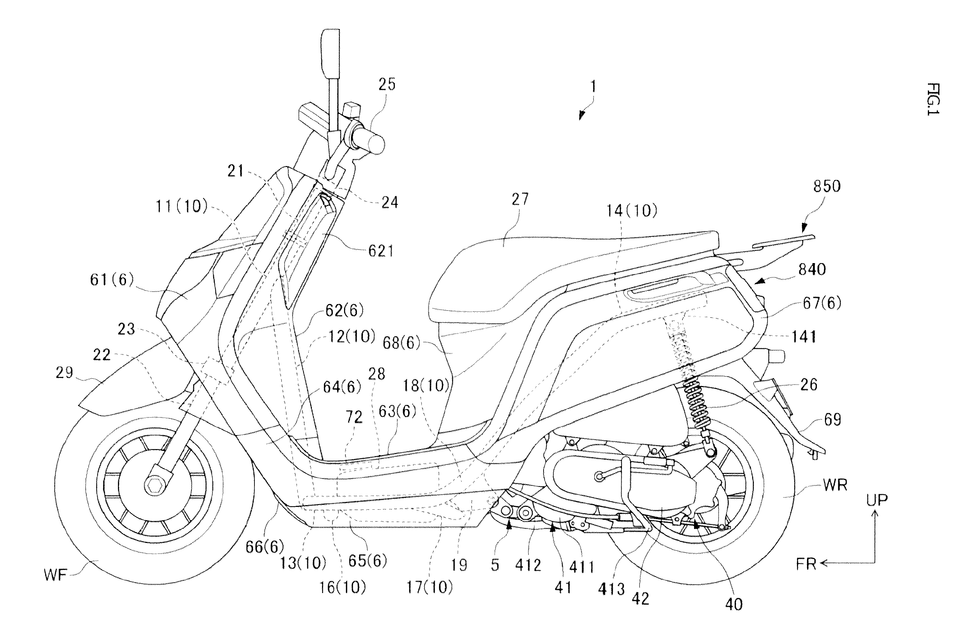

Now, the present invention will be described below by showing an embodiment (first embodiment) wherein the invention is applied to a scooter type motorcycle and referring to the drawings. First of all, referring to FIG. 1, a general configuration of a motorcycle 1 according to the present embodiment will be described. FIG. 1 is a left side view of a scooter type motorcycle as a saddle type vehicle according to the first embodiment of the present invention.

In the following description, the directions (or sides) such as front, rear, left, right, up and down conform to the directions (or sides) as viewed from the rider (driver) seated on the motorcycle, unless specified otherwise. Besides, in the drawings, arrow FR denotes the front side (traveling direction) of the vehicle, arrow UP denotes the upper side of the vehicle, and arrow LH denotes the left-hand side as viewed from a person facing along the traveling direction of the vehicle.

As shown in FIG. 1, the motorcycle 1 according to this embodiment includes, as main components: a vehicle body such as a body frame 10 serving as a main frame; a front wheel WF; a front fender 29 disposed on the upper side of the front wheel WF; a rear wheel WR; a unit swing engine 40 which rotatably supports the rear wheel WR at the rear end side thereof; a link mechanism 5 interposed between the unit swing engine 40 and the body frame 10; a rear cushion 26 interposed between the unit swing engine 40 and the body frame 10 on the rear side of the vehicle; a seat 27 on which to seat the rider; a cover member 6 which covers parts of the vehicle; and a fuel tank 28.

The body frame 10 is configured by integrally connecting a plurality of kinds of steel members by welding. The body frame 10 includes: a head pipe 11; down frames 12 as lower extension parts; floor frames 13 as floor parts; seat rails 14; and a plurality of cross members (a front-side cross pipe 16, a rear-side cross pipe 17, etc.).

The head pipe 11 is provided at a front portion of the body frame 10, and steerably supports the front wheel WF. The down frames 12 extend rearward and downward from the head pipe 11. The down frames 12 are connected to the head pipe 11 at front end portions thereof. Rear end side portions of the down frames 12 obliquely extend downwardly rearward.

The floor frames 13 are provided in a left-right pair. The pair of floor frames 13 extend rearward from lower portions of the down frames 12. Front end portions of the pair of floor frames 13 are connected to lower portions of the down frames 12. The pair of floor frames 13 extend rearward from the pair of down frames 12.

The seat rails 14 are provided in a left-right pair. The pair of seat rails 14 are provided under the seat 27, and support the seat 27 indirectly through a storage box which is fixed to the pair of seat rails 14, and the like. The pair of seat rails 14 extend upward and rearward (obliquely toward an upper rear side) from rear portions of the pair of floor frames 13. Front end portions of the pair of seat rails 14 are connected to the pair of floor frames 13. The seat rails 14 form a rear portion of the body frame 10.

A bent part 18 is provided at the boundary between the floor frame 13 and the seat rail 14. The bent parts 18 are each provided with a pivot plate 19 extending downward from the bent part 18. The pivot plates 19 are provided in a left-right pair. The pivot plates 19 are joined to the bent parts 18.

The cross members are composed of pipes extending in the left-right direction. The pair of floor frames 13 are, and also the pair of seat rails 14 are, interconnected in the left-right direction by the cross members. The cross members include the front-side cross pipe 16 and the rear-side cross pipe 17.

The front-side cross pipe 16 and the rear-side cross pipe 17 connect the pair of floor frames 13 in the left-right direction. The front-side cross pipe 16 and the rear-side cross pipe 17 extend in the left-right direction of the vehicle. The front-side cross pipe 16 and the rear-side cross pipe 17 are so provided that they are spaced from each other by a predetermined distance along the longitudinal direction of the vehicle. The front-side cross pipe 16 interconnects front portions (front-side portions) of the pair of floor frames 13, whereas the rear-side cross pipe 17 interconnects rear portions (rear-side portions) of the pair of floor frames 13.

The front wheel WF is rotatably supported by a pair of left and right front forks 22. At upper portions of the pair of front forks 22, a steering stem 21 is inserted and passed through the head pipe 11. The steering stem 21 is connected to a top bridge 24 and a bottom bridge 23. The steering stem 21 supports the pair of front forks 22 through the bottom bridge 23 so that the front forks 22 can be turned clockwise and counterclockwise relative to the head pipe 11. A handlebar 25 provided over the top bridge 24 can steer the front wheel WF.

The unit swing engine 40 is swingably supported on the body frame 10. The unit swing engine 40 is swingably supported on the body frame 10 through the link mechanism 5 to be described later on the side of a front portion thereof, and is swingably supported on the body frame 10 through the rear cushion 26 at a rear end portion thereof. In addition, the unit swing engine 40 rotatably holds the rear wheel WR on the rear side.

The unit swing engine 40 is configured by integrally providing an engine body 41 and a power transmission mechanism 42. The engine body 41 is a power unit (prime mover) which generates a driving force of the motorcycle 1, and is mounted on a longitudinal-directionally substantially central portion of the vehicle body. The engine body 41 has a crankcase 411 on the rear side, and is connected to the link mechanism 5 at a boss part 412 provided at a front portion of the crankcase 411. In addition, a center stand 413 is turnably supported on a lower portion of the engine body 41. The center stand 413, when set in its operational position, can support the body frame.

The power transmission mechanism 42 transmits the driving force of the engine body 41 to the rear wheel WR. The power transmission mechanism 42 is disposed rearwardly of the engine body 41, and is attached to the engine body 41, thereby constituting the unit swing engine 40 together with the engine body 41. The power transmission mechanism 42 is disposed on the vehicle-width-directionally left side.

The link mechanism 5 allows oscillations, in the vertical and front-rear directions, of the unit swing engine 40, thereby absorbing impact loads inputted to the rear wheel WR from the road surface. The link mechanism 5 is turnably supported on the pivot plates 19, and is turnably supported on the unit swing engine 40.

The rear cushion 26 absorbs the impact loads inputted from the road surface to the rear wheel WR, by its shock-absorbing action. An upper end portion of the rear cushion 26 is connected to the seat rail 14 on the left side, which constitutes one side of the seat rails 14, through an upper end support bracket 141 serving as a cushion support part. Specifically, the upper end support bracket 141 as the cushion support part for the seat rail 14 supports, on one side of the seat rails 14, the rear cushion 26 which elastically supports the rear wheel WR. A lower end portion of the rear cushion 26 is connected to a rear end portion of the unit swing engine 40.

The rear cushion 26 extends in the form of a straight line which interconnects the upper end support bracket 141 and the rear end portion of the unit swing engine 40. The rear cushion 26 extends obliquely in a downwardly rearward direction. The rear cushion 26 is provided in the state wherein a range (stroke) of compression is secured. The rear cushion 26 is so inclined that its upper end is located forwardly of its lower end.

The cover member 6 includes a front cover 61, a leg-side shield cover 62, a floor cover 63, a floor side cover 64, an under cover 65, an inner fender cover 66, a rear side cover 67, an under-the-seat center cover 68, etc.

The front cover 61 is disposed at a front portion of the motorcycle 1, and covers such parts as a front portion of the body frame 10. The leg-side shield cover 62 covers a part of the head pipe 11 and a part of the down frames 12, from the rear side of the motorcycle 1, at a position on the front side of the rider's seating position. A box lid 621 capable of opening and closing a glove box in which gloves can be stored is attached to an upper portion of the shield cover 62.

The floor cover 63 covers the upper side of the pair of floor frames 13 and the upper side of the fuel tank 28, from the upper side of the motorcycle 1, at a position on a lower side of the rider's seating position. A front end portion and a rear end portion of the floor cover 63 each extend toward an upper side.

An upper surface of the floor cover 63 forms a flat foot rest surface; thus, the floor cover 63 functions as a floor step. The floor cover 63 is disposed on the upper side of the pair of floor frames 13, and the rider's feet are put on the upper surface of the floor cover 63. The floor cover 63 is formed between the head pipe 11 and the seat 27 in the longitudinal direction of the motorcycle 1.

A reinforcement member 72 is provided on the lower side of the floor cover 63. The reinforcement member 72 is formed bridgingly between the pair of floor frames 13. The reinforcement member 72 is fixed on the lower side of the floor cover 63. The reinforcement member 72 will be detailed later.

The floor side cover 64 is disposed at side portions of the motorcycle 1, on a lower side of the rider's seating position. The floor side cover 64 covers the fuel tank 28 to be described later and the like from lower lateral sides of the motorcycle 1.

The under cover 65 is disposed at a lower portion of the motorcycle 1, on a lower side of the rider's seating position. The under cover 65 covers at least the lower side of the pair of floor frames 13 from below. The under cover 65 is fixed to the front-side cross pipe 16 and the rear-side cross pipe 17.

The inner fender cover 66 is disposed rearwardly of the front wheel WR, on the front side of the under cover 65. The inner fender cover 66 covers the lower side of a front portion of the motorcycle 1, from the front side of the motorcycle 1. The inner fender cover 66 engages with the under cover 65.

The rear side cover 67 is disposed at side parts of a rear portion of the motorcycle 1, and covers both side surfaces of a lower portion of the seat 27 at the rear portion of the motorcycle 1. The under-the-seat center cover 68 covers a part under a front portion of the seat 27.

The fuel tank 28 is provided under the floor cover 63. The fuel tank 28 is disposed between the floor cover 63 and the under cover 65 in the vertical direction. In addition, the fuel tank 28 is disposed between the pair of floor frames 13 in the vehicle width direction, and is disposed between the front-side cross pipe 16 and the rear-side cross pipe 17 in the longitudinal direction of the vehicle.

Now, a hold part structure of the motorcycle 1 according to this embodiment will be described referring to FIGS. 1 to 10.

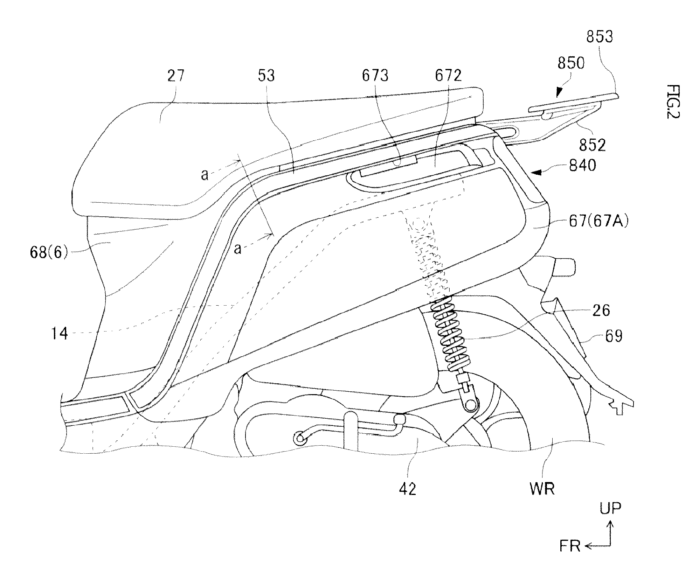

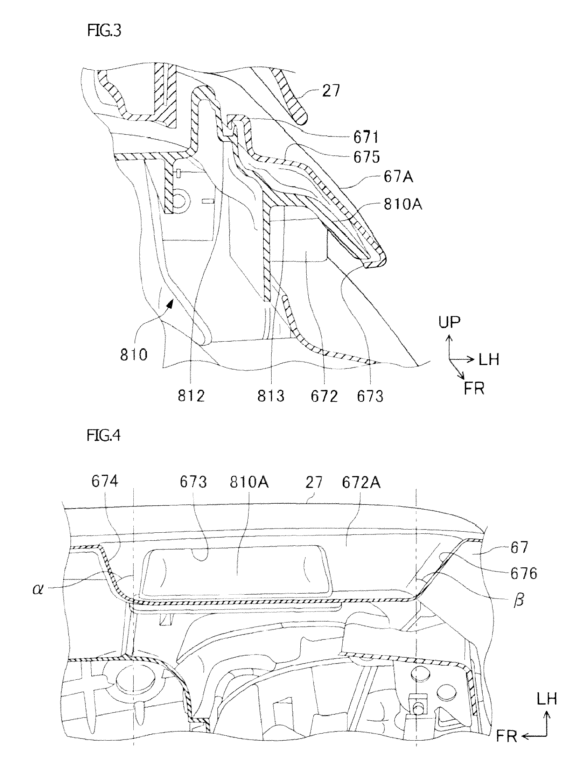

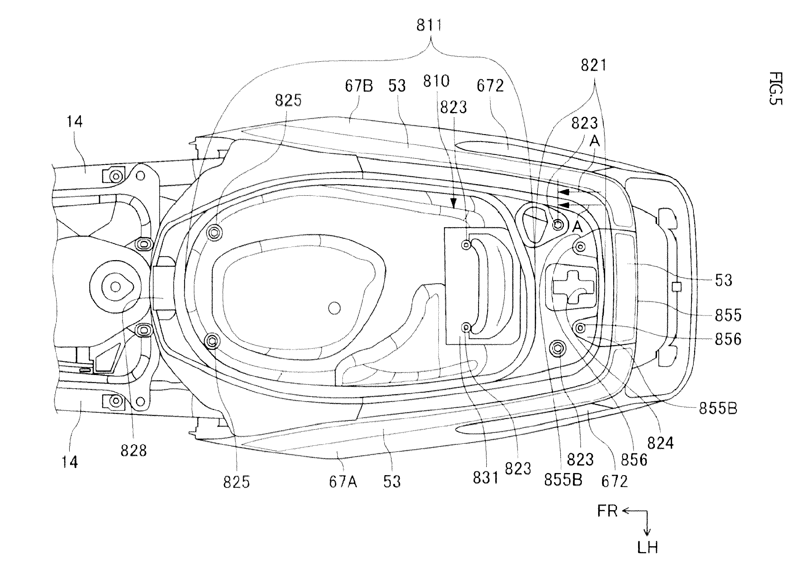

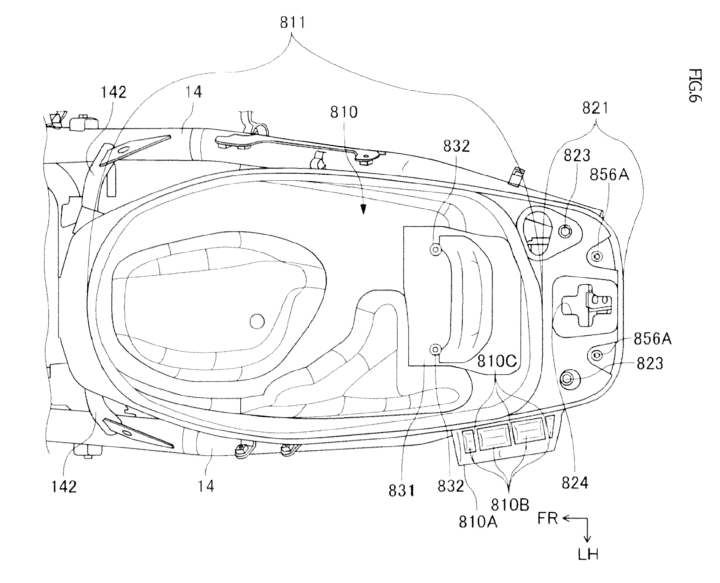

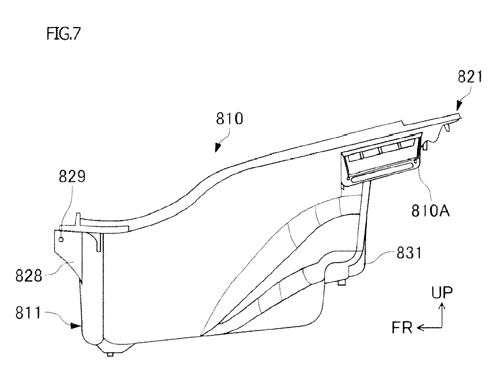

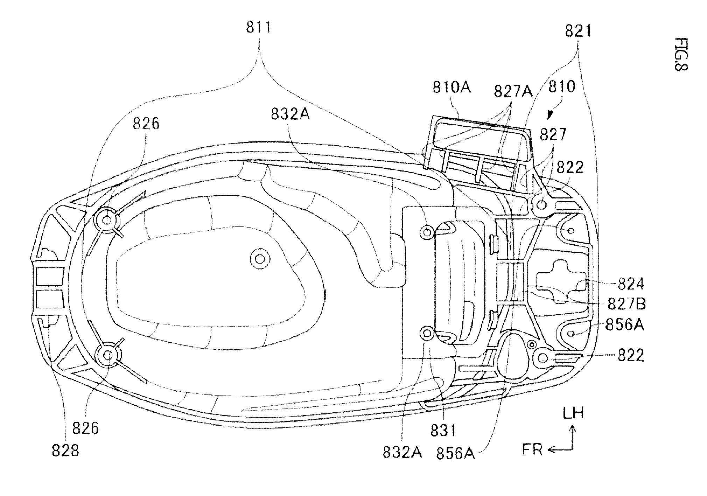

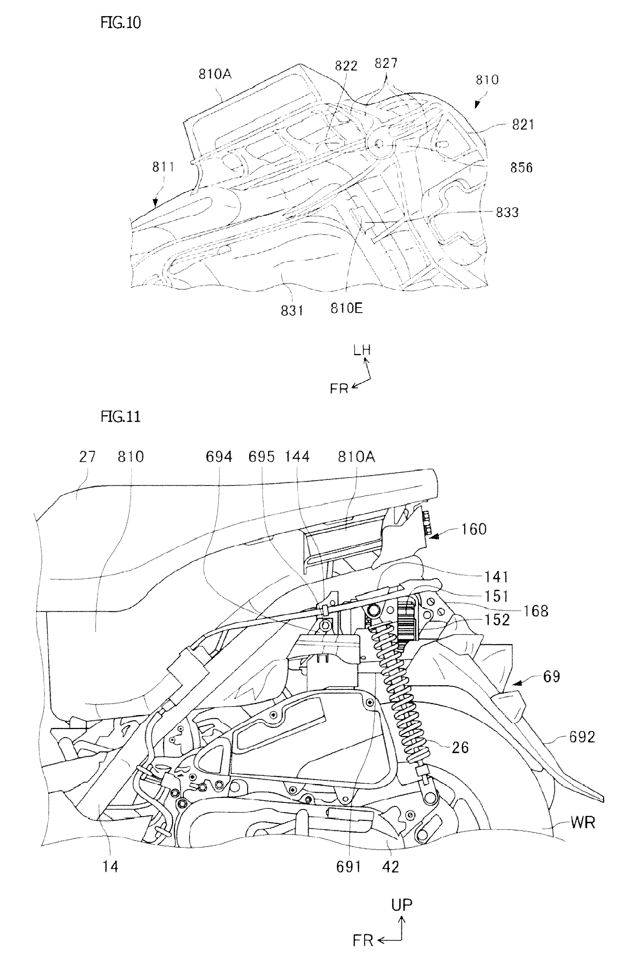

FIG. 2 is a left side view of a rear portion of the motorcycle 1. FIG. 3 is an enlarged sectional view of a grip part of the motorcycle 1. FIG. 4 is an enlarged sectional view of the grip part of the motorcycle 1. FIG. 5 is a plan view showing a state wherein the seat 27 has been detached from a rear portion of the motorcycle 1. FIG. 6 is a plan view showing a state wherein the seat 27 and the rear side cover 67 have been detached from a rear portion of the motorcycle 1. FIG. 7 is a left side view of a storage box 810 of the motorcycle 1. FIG. 8 is a bottom view of the storage box 810 of the motorcycle 1. FIG. 10 is a lower-side perspective view of the storage box 810 of the motorcycle 1.

The hold part structure of the motorcycle 1 includes the seat 27, the storage box 810, the rear side cover 67 as a side cover, and the grip part 810A.

As shown in FIG. 7, the storage box 810 includes a storage part 811 formed in a bottomed tube-like shape, and an extension part 821 extending in a plate-like shape rearward from the storage part 811. The storage part 811 and the extension part 821 are formed integrally.

As shown in FIG. 6, at a boundary part between the storage part 811 and the extension part 821 on the left side of the storage box 810, the grip part 810A is formed so as to range across the boundary. Therefore, the grip part 810A is provided at a vehicle side surface on the left side of the motorcycle 1. The grip part 810A is formed to be integral with the storage part 811 and the extension part 821.

As shown in FIG. 6, the grip part 810A is so shaped as to extend in the longitudinal direction of the vehicle. Besides, as shown in FIG. 10, the grip part 810A has a roughly U-shaped sectional shape opening to the lower side, uniformly from one end to the other end with respect to the longitudinal direction of the vehicle. Therefore, the grip part 810A has an upwardly recessed shape. In addition, as shown in FIG. 3, a portion of the storage box 810 on the upper side of the grip part 810A has a box part groove 812 opening to the upper side. Besides, a right-side box part groove (not shown) opening to the upper side and shaped like the box part groove 812 is provided also at an upper portion on the right side of the storage box 810.

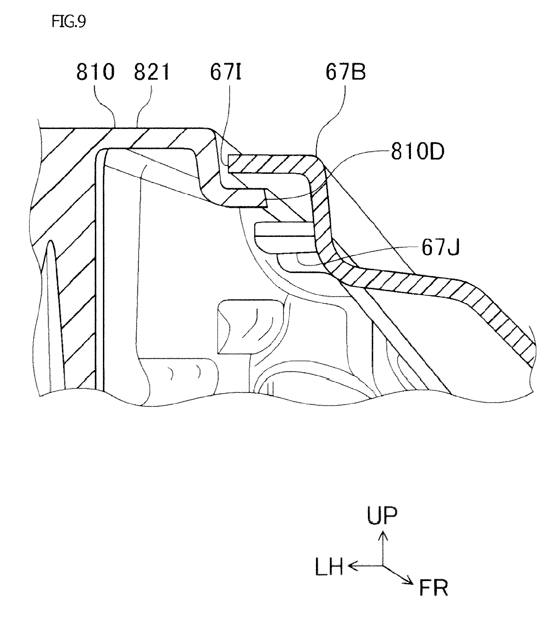

The left-side and right-side upper box part grooves 812 of the storage box 810 are formed at positions one step lower than the upper end of the storage box 810. Besides, as shown in FIG. 9, left and right edge portions of the storage box 810 each have a stepped edge part 810D lowered one step and extending toward the outside of the vehicle.

In addition, as shown in FIG. 6, an upper portion of the grip part 810A has recesses 810B and ribs 810C. The recesses 810B are formed to be recessed to the lower side while being aligned in four, roughly along the longitudinal direction of the vehicle. The ribs 810C are formed to extend roughly in the left-right direction, and are partitioning the recesses 810B aligned in four.

As shown in FIG. 8, portions near left and right end portions of the extension part 821 are each formed therein with a single bolt passing hole 822 through which a bolt 823 (see FIG. 6) is passed. The portions near the left and right end portions of the extension part 821, where the bolt passing holes 822 are formed, fasten the seat rails 14 as the body frame to the storage box 810. The bolts 823 (see FIG. 6) are passed respectively through the bolt passing holes 822. The extension part 821 of the storage box 810 is fixed to each portion near rear end portions of the pair of seat rails 14 by the bolts 823. In addition, clips 856A projecting upward are provided at portions near the left and right end portions of the extension part 821, on the rear side relative to the bolt passing holes 822. Besides, a seat catch passing hole 824 through which to pass a seat catch 143 for locking the seat 27 which can be opened and closed, with a hinge provided at a front portion of the storage box 810 as a center, is formed in a left-right-directionally central portion of the extension part 821. In addition, as shown in FIG. 8, a pair of clip locking parts 832A composed of through-holes are provided in a rear portion of the storage part 811 of the storage box 810.

As shown in FIG. 8, portions near left and right end parts of a front portion of the storage part 811 of the storage box 810 are each formed therein with a single bolt passing hole 826 through which to pass a bolt 825 (see FIG. 5). The portions near the left and right end portions of the storage part 811, where the bolt passing holes 826 are formed, constitute a fastening part for fastening the storage box 810 to the seat rails 14 constituting the body frame. The bolts 825 are passed respectively through the bolt passing holes 826. A front portion of the storage part 811 of the storage box 810 is fixed by the bolts 825 to a U-shaped cross member 142 (see FIG. 6) which is so provided as to bridgingly extend between the pair of seat rails 14 and which is curved upward from the positions of connection to the pair of left and right seat rails 14.

As shown in FIG. 8, a portion of the extension part 821 formed with the bolt passing hole 822 and the grip part 810A are interconnected by rib walls 827 extending downward from a lower surface of the extension part 821. In the bottom view shown in FIG. 8, the rib walls 827 extend roughly radially from that portion of the extension part 821 at which the bolt passing hole 822 is formed. The rib walls 827 are formed to be integral with the extension part 821, those portions near the left and right end portions of the storage part 811 at which the bolt passing holes 826 are formed, and the grip part 810A.

In addition, the grip part 810A is connected to the storage part 811 and the extension part 821 by rib walls 827A extending roughly leftward from the storage part 811 and the extension part 821. Besides, rib walls 827B are provided which extend downward from the lower surface of the extension part 821. The rib walls 827B are formed to be connected to a rear end portion of the storage part 811.

As shown in FIG. 7, a front end portion of the storage part 811 of the storage box 810 has a seat support part 828 which turnably supports the seat 27. The seat support part 828 is formed with a through-hole 829 piercing therethrough in the left-right direction. A pivotal shaft (not shown) is passed through the through-hole 829. The seat support part 828 and the through-hole 829 constitute a hinge which turnably supports the seat 27.

As shown in FIGS. 5 to 10, a lid 831 which can be opened and closed is provided at a rear wall of the storage part 811. As shown in FIG. 6 and the like, one clip 832 is provided at each of left and right end portions of the lid 831. In addition, engaging claw parts 833 for engagement with claw part engaging holes 810E (see FIG. 10) formed in the storage box 810 are provided, in the manner of projecting rearward, at left and right end portions of a rear end part of the lid 831. The lid 831 is opened by releasing the engagement of the engaging claw parts 833 with the claw part engaging holes 810E and releasing the engagement of the clip 832 with the clip locking part 832A. When the lid 831 is thus opened, it is possible to take out a battery 151 to the interior of the storage part 811 and to replace the battery 151.

As shown in FIG. 5 and the like, the rear side cover 67 is so configured that it can be bisected into a left side part 67A and a right side part 67B, at the central position of the motorcycle 1 in the left-right direction. The right side part 67B of the rear side cover 67 is fixed by being screwed to a cover fixing part (not shown) provided on the right-side seat rail 14. The left side part 67A of the rear side cover 67 is fixed by being screwed to a cover fixing part (not shown) provided on the left-side seat rail 14. In addition, an upper end portion of the left side part 67A and an upper end portion of the right side part 67B, of the rear side cover 67, are provided respectively with a left-side groove 671 (see FIG. 3) and a right-side groove (not shown) which are opened to the lower side. The left-side groove 671 is fitted into and engaged with the box part groove 812, while the right-side groove (not shown) is fitted into and engaged with a right-side box part groove (not shown). As a result, the left side part 67A and the right side part 67B of the rear side cover 67 are fixed in the vehicle width direction (left-right direction) relative to the storage box 810.

Besides, as shown in FIG. 9, end edges of the left side part 67A and the right side part 67B of the rear side cover 67, on the inner side with respect to the vehicle width direction of the motorcycle 1, have a stepped edge part 67I raised one step and extending toward the inner side with respect to the vehicle width direction of the motorcycle 1. In addition, a projection 67J extending in parallel to the stepped edge part 67I is provided. Each of the stepped edge parts 810D at the left and right edge portions of the storage box 810 is disposed between the stepped edge part 67I and the projection 67J. As a result, the left side part 67A and the right side part 67B of the rear side cover 67 are fixed in the height direction (vertical direction) relative to the storage box 810.

This ensures that the right side part 67B covers the right side of the storage box 810, while the left side part 67A covers the left side of the storage box 810. In addition, as seen from comparison between FIG. 5 and FIG. 6, an upper portion of the right side part 67B of the rear side cover 67 is so provided as to cover a right edge part of the upper side of the storage box 810. An upper portion of the left side part 67A of the rear side cover 67 is so provided as to cover a left edge portion of the upper side of the storage box 810.

The left side part 67A and the right side part 67B each have a recess 672 formed to be elongated in the longitudinal direction of the vehicle. The recess 672 of the left side part 67A extends from a central position of the left side part 67A in the longitudinal direction of the vehicle to the vicinity of a rear end portion of the left side part 67A. As shown in FIGS. 2 to 4, an opening 673 piercing through the left side part 67A is provided in an upper surface of a front half of the recess 672 of the left side part 67A. As shown in FIG. 4, therefore, the opening 673 is provided close to a front wall 674 of the recess 672.

As shown in FIG. 3, the left side part 67A has an inclined wall extending downward as one goes outward in the vehicle width direction of the motorcycle 1. The opening 673 is in such a positional relationship as to conform to the opening of the roughly U-shaped grip part 810A. More specifically, a lower end portion of the left side part 67A constituting the opening 673 covers a lower end portion of the grip part 810A. An upper surface 675 of the recess 672 of the left side part 67A is disposed to extend in the longitudinal direction of the vehicle along the grip part 810A, namely, roughly in parallel to an upper surface 813 of the grip part 810A. As shown in FIG. 4, the angle (acute angle) α that the front wall 674 of the recess 672 forms with a vertical plane (two-dotted chain line on the left side in FIG. 4) extending in the vehicle width direction is set to be smaller than the angle (acute angle) β that the rear wall 676 of the recess 672 forms with a vertical plane (two-dotted chain line on the right side in FIG. 4) extending in the vehicle width direction.

As shown in FIG. 5, the recess 672 of the right side part 67B extends from a central position of the right side part 67B in the longitudinal direction of the vehicle to the vicinity of a rear end part of the right side part 67B. The recess 672 of the right side part 67B is in left-right symmetry with the recess 672 of the left side part 67A. It should be noted here, however, that an opening such as the opening 673 piercing through the left side part 67A is not provided in an upper surface of the recess 672 of the right side part 67B.

In addition, as shown in FIG. 2, a rear side seal 53 as a lace is adhered to the rear side cover 67. The rear side seal 53 is adhered to a side surface on the outside of the rear side cover 67. The area of adhesion of the rear side seal 53 ranges from a front end portion of the rear side cover 67 (a portion rearward of a part of joint to the floor side cover 64) to a rear end portion of the rear side cover 67. Incidentally, a rear side seal 53 (see FIG. 5 and the like) in left-right symmetry with the rear side seal 53 adhered to the left side surface of the vehicle is adhered also to the right side surface (on the right side as viewed from a person facing forward) of the vehicle; specifically, it is adhered to a side surface on the outside of the right side part 67B which constitutes the rear side cover 67 and which is disposed at the right side surface. Besides, the rear side seal 53 is adhered also to a vertical-directionally central portion of a rear center cover 855 which will be described later.

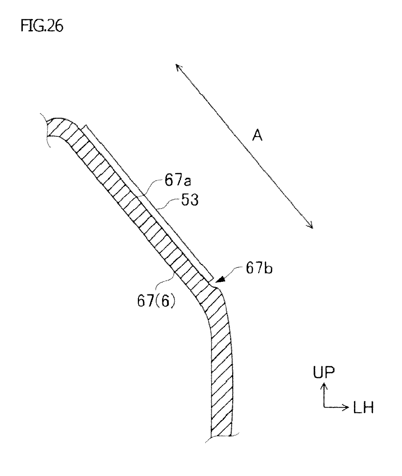

As shown in FIG. 2, a part of the rear side seal 53 is adhered to that area of the rear side cover 67 which is adjacent to a lower edge portion of the seat 27 and which is adjacent to the upper edge of the recess 672. In the area of the rear side cover 67, as shown in FIG. 26, a seal adhesion surface 67a is formed in a straight line shape in the direction A orthogonal to the lengthwise direction of the rear side seal 53 (to the direction normal to the paper surface), and, in addition, a stepped part 67b is provided at the lower edge of the seal adhesion surface 67a. The stepped part 67b is provided along the lengthwise direction of the seal adhesion surface 67a. The rear side seal 53 is so adhered as to be along the stepped part 67b in the lengthwise direction thereof.

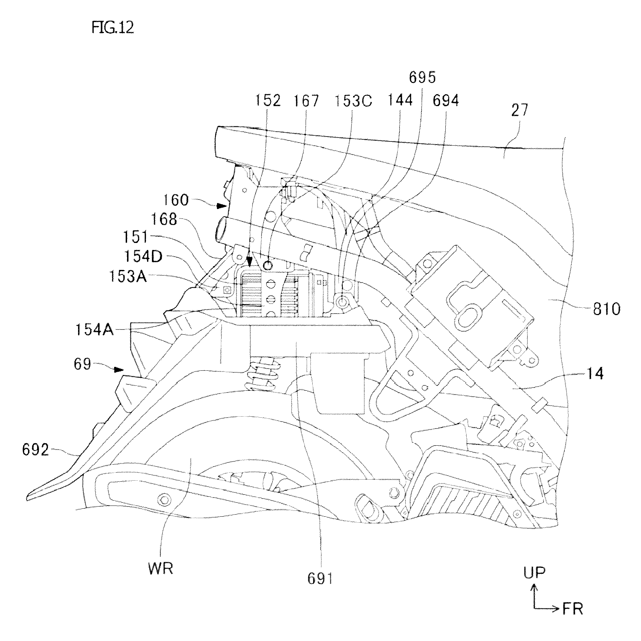

As shown in FIGS. 11 and 12, the storage box 810 is provided under the seat 27. The seat 27 is formed with a through-hole (not shown) in a portion on the lower side of a front portion thereof. Through this through-hole (not shown), the pivotal shaft (not shown) passed through the through-hole 829 in the storage box 810 is passed. This ensures that the seat 27 is supported on the seat support part 828 of the storage box 810 (see FIG. 7) so that it can be turned with the pivotal shaft (not shown) as a center.

In addition, the seat 27 has a to-be-caught part (not shown) at a rear portion thereof. The to-be-caught part can be locked onto the seat catch 143 disposed in the seat catch passing hole 824 formed in the extension part 821 of the storage box 810. In the state wherein the to-be-caught part is not locked to the seat catch 143, the seat 27 may be turned into a position such that a seat surface of the seat 27 is substantially parallel to the vertical direction, whereby an upper-end opening of the storage part 811 of the storage box 810 is set into an opened state. When the seat 27 is turned into a position such that the to-be-caught part is locked onto the seat catch 143 and the seat surface of the seat 27 is substantially horizontal, the upper-end opening of the storage part 811 of the storage box 810 is set into a state of being closed with the seat 27.

Now, a rear fender support structure of the motorcycle 1 will be described below referring to FIG. 1 and FIGS. 11 to 17.

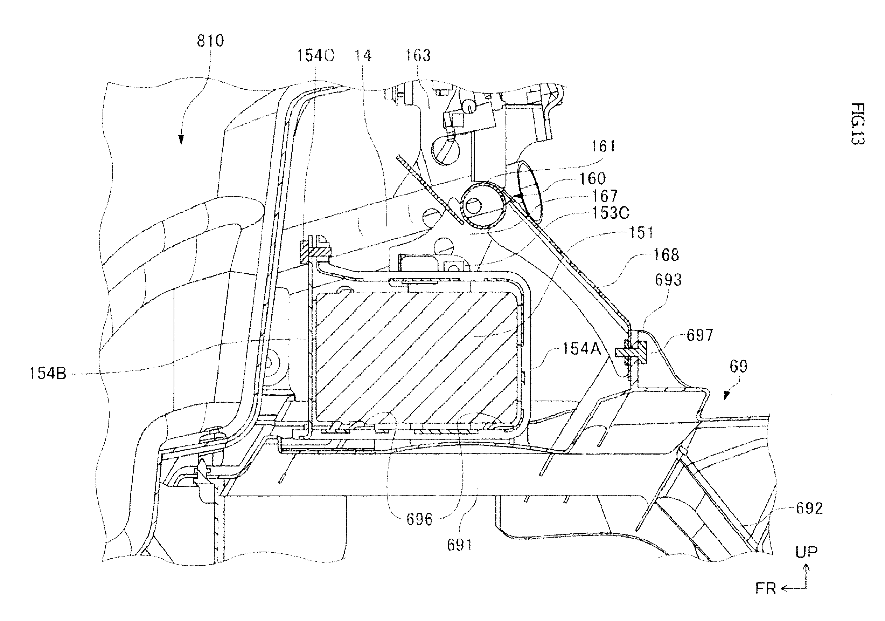

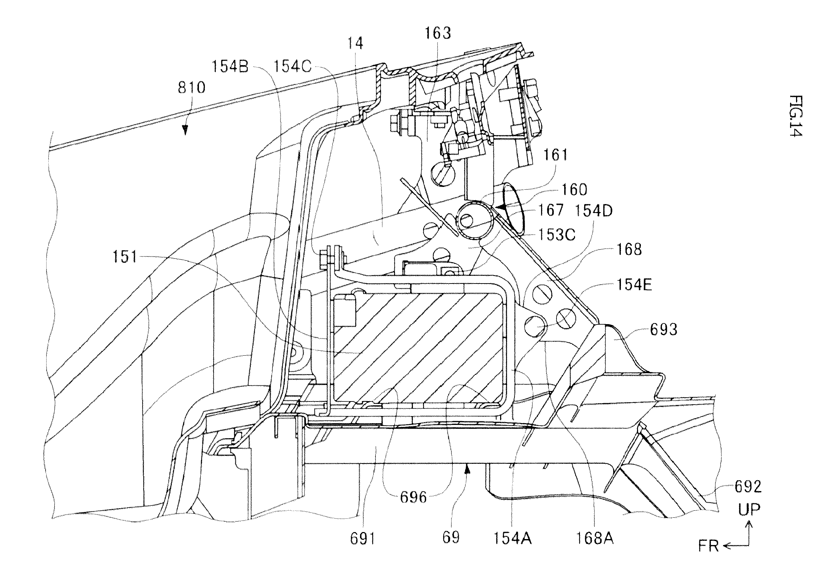

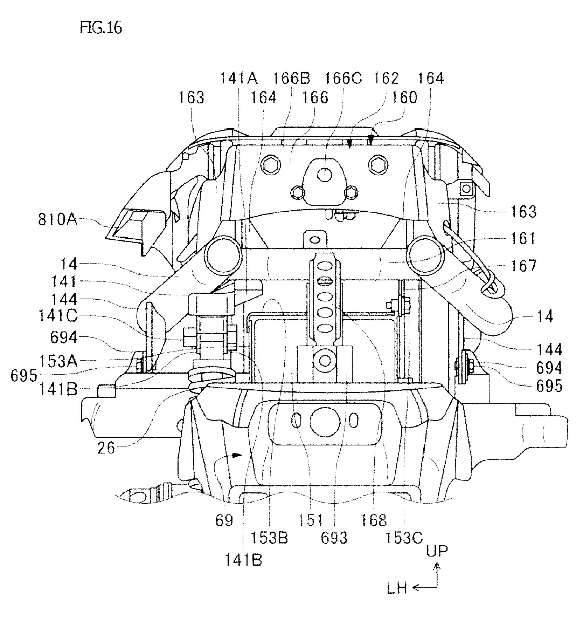

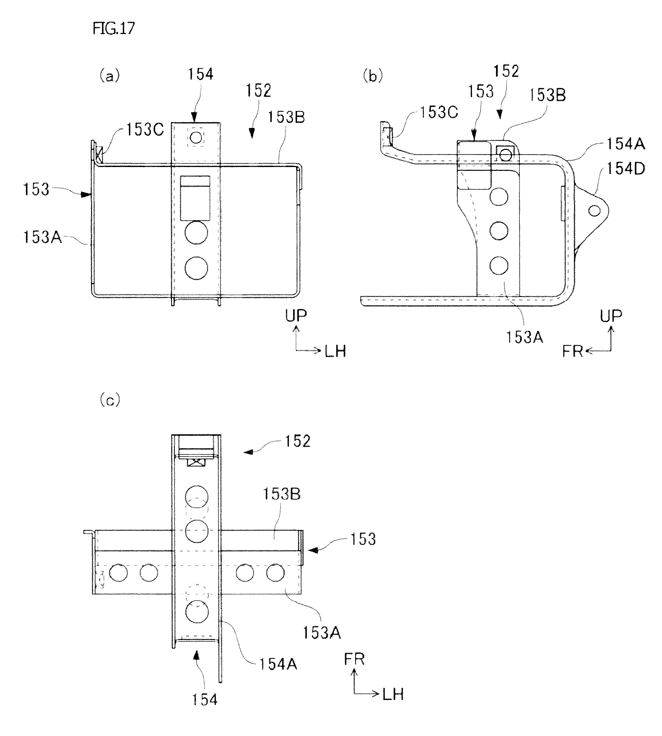

FIG. 11 is a left side view showing a state wherein the rear side cover 67, a taillight unit 840, a carrier 850 and the like have been detached from a rear portion of the motorcycle 1. FIG. 12 is a right side view showing the state wherein the rear side cover 67, the taillight unit 840, the carrier 850 and the like have been detached from the rear portion of the motorcycle 1. FIG. 13 is an enlarged sectional view of the battery 151 and its surroundings in the motorcycle 1. FIG. 14 is an enlarged sectional view, taken at a vehicle-width-directionally central position, showing the battery 151 and its surroundings in the motorcycle 1. FIG. 16 is a back elevation of the battery 151 and its surroundings in the motorcycle 1. FIG. 17 illustrates a battery stay 152 for holding the battery 151 of the motorcycle 1, wherein (a) is a front view, (b) is a left side view, and (c) is a bottom view.

The rear fender support structure of the motorcycle 1 includes the seat rails 14, a rear fender 69, and the battery 151. The battery 151 has a roughly rectangular parallelepiped shape, and supplies the taillight unit 840 (see FIG. 1) and the like with electricity. The battery 151 is held by the battery stay 152. The battery stay 152 is fixed to the seat rails 14.

More specifically, as shown in FIGS. 13 to 16 and the like, a cross member 160 and a rear part stay 168 are connected to the seat rails 14. As shown in FIG. 16 and the like, the cross member 160 has a pipe-shaped part 161 and a plate-shaped part 162. The pipe-shaped part 161 has a straight line shape extending in the left-right direction. The pipe-shaped part 161 interconnects (fastens) the pair of seat rails 14 in the manner of extending bridgingly between rear end portions of the pair of seat rails 14. A battery stay right-side support part 167 is provided in the vicinity of a right end portion of the pipe-shaped part 161. The battery stay right-side support part 167 extends downward and forward from the vicinity of the right end portion of the pipe-shaped part 161.

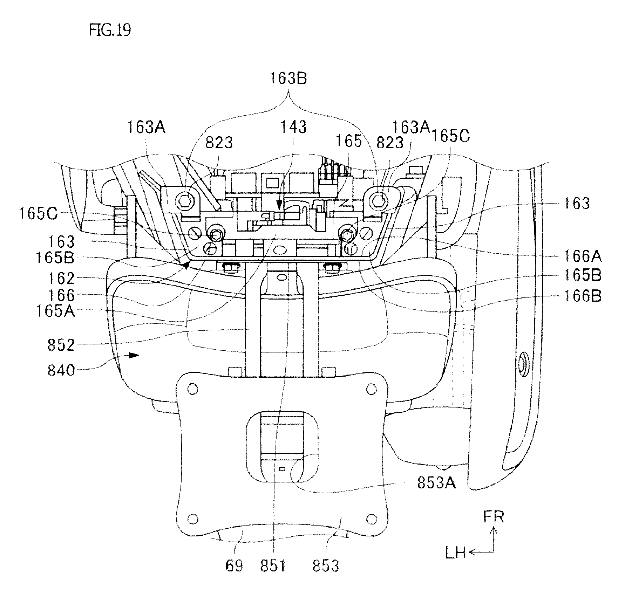

As shown in FIG. 16 and the like, the plate-shaped part 162 includes a pair of side plate parts 163, a pair of lateral plate parts 164, a seat catch fixing part 165 (see FIG. 19), and a plate-shaped rear surface part 166. The pair of side plate parts 163 extend respectively along the pair of seat rails 14 and extend upward, and are fixed respectively to the pair of seat rails 14. As shown in FIG. 19, storage box fixing parts 163A formed with storage box fixing holes 163B for screw engagement with the bolts 823 are formed at front end portions of the pair of side plates 163. By this screw engagement, the extension part 821 of the storage box 810 is fixed to the seat rails 14 through the cross member 160. The pair of lateral plate part 164 (see FIG. 16) extend respectively along the pipe-shaped part 161 and extend upward, and are fixed to the pipe-shaped part 161.

As shown in FIG. 19, the seat catch fixing part 165 (see FIG. 19) includes a seat catch plate 165A, and plate fixing parts 165B. The plate fixing parts 165B are formed in a plate shape extending horizontally rearward from the pair of lateral plate parts 164 (see FIG. 16), respectively. As shown in FIG. 19, the seat catch plate 165A is so provided as to bridgingly extend between the plate fixing parts 165B. Left and right end portions of the seat catch plate 165A are fixed to the plate fixing parts 165B by bolts 165C. The seat catch 143 is fixed to a substantially central portion of the seat catch plate 165A.

The plate-shaped rear surface part 166 has a plate-like shape having a front surface 166A and a back surface 166B. The normal to the front surface 166A is directed substantially forward, and the normal to the back surface 166B is directed substantially rearward. The plate-shaped rear surface part 166 is integrally joined to the pair of side plate parts 163 at both left and right end portions thereof. The plate-shaped rear surface part 166 interconnects (fastens) the pair of side plate parts 163 in the manner of bridgingly extending between rear end portions of the pair of side plate parts 163. The plate-shaped rear surface part 166 is located rearwardly of the rear end of the extension part 821 of the storage box 810. The seat catch 143 (see FIG. 19) is disposed forwardly of the plate-shaped rear surface part 166 constituting the cross member 160.

As shown in FIGS. 13 to 16, the rear part stay 168 extends rearward and downward from a central portion of the pipe-shaped part 161 in the left-right direction. Specifically, the rear part stay 168 is provided in the vehicle-width-directional center, is connected to the cross member 160, and extends from the seat rails 14 with the cross member 160 interposed therebetween.

As shown in FIG. 1, the rear fender 69 covers the upper side and the rear side of the rear wheel WR. As shown in FIGS. 11 and 12, the rear fender 69 has a base part 691 and a rear extension part 692. The base part 691 and the rear extension part 692 are formed integrally. The base part 691 is disposed on the upper side of the rear wheel WR, while the rear extension part 692 is disposed on a rear upper side of the rear wheel WR.

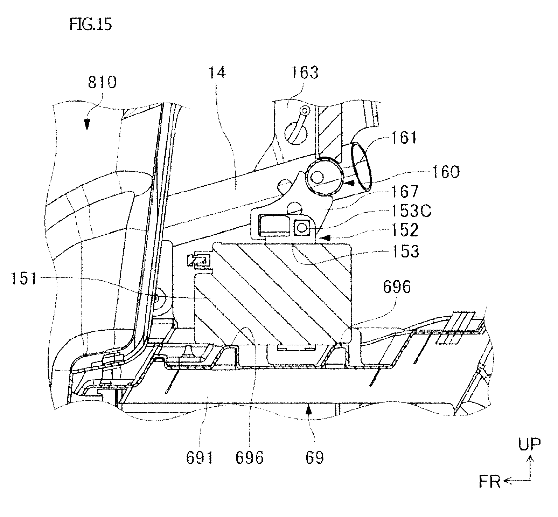

As shown in FIG. 13, a rear portion of the base part 691 of the rear fender 69 has a rear part stay joint portion 693 which projects upward. A lower end portion of the rear part stay 168 is fastened and fixed to the rear part stay joint portion 693 by a bolt 697. In addition, as shown in FIGS. 11 and 12, the base part 691 is provided, on left-right-directionally both sides of a front portion thereof, respectively with seat rail joint parts 694 which project upward. Rear fender joint parts 144 extending downward from the seat rails 14 are fastened and fixed to the seat rail joint parts 694 by bolts 695, respectively. As shown in FIG. 16, the rear fender joint parts 144 are disposed on the vehicle-width-directionally (left-right-directionally) outer sides of both end portions of the cross member 160 which will be described later. Specifically, the rear fender 69 is fastened, on both left and right sides of a front portion thereof, to the seat rails 14 through the rear fender joint parts 144, respectively. Besides, as shown in FIG. 15 and the like, battery contact projections 696 projecting upward are provided on the upper surface of the base part 691 of the rear fender 69. The battery contact projections 696 are disposed in a front-rear pair, and are each trapezoidal in shape in section orthogonal to the left-right direction.

As shown in FIG. 11 and the like, the seat rail 14 on the left side is formed with an upper end support bracket 141 at a position rearwardly of the rear fender joint part 144. As shown in FIG. 16, the upper end support bracket 141 includes a cushion supporting gusset 141A, and support plate-shaped parts 141B. The cushion supporting gusset 141A is so formed as to bridgingly interconnect the vicinity of a left end portion of the pipe-shaped part 161 and the left-side seat rail 14. The support plate-shaped parts 141B, provided in a pair, extend downward from a lower surface of the cushion supporting gusset 141A. As shown in FIG. 11 and the like, the upper end support bracket 141 is roughly triangular in overall shape in side view.

As shown in FIG. 16, an upper end portion of the rear cushion 26 is disposed between the pair of support plate-shaped parts 141B. The support plate-shaped parts 141B are each formed with a through-hole (not shown) piercing therethrough in the left-right direction. A bolt 141C is passed through the through-holes and a through-hole (not shown) formed in an upper end portion of the rear cushion 26. This ensures that the upper end portion of the rear cushion 26 is connected to the left-side seat rail 14 (as a one-side component of the seat rails 14) through the upper end support bracket 141 serving as a cushion support part.

As shown in FIG. 17, the battery stay 152 has a width-direction circumferential part 153 and a vehicle longitudinal-direction circumferential part 154. The battery stay 152 covers a part of the battery 151. The width-direction circumferential part 153 has a lower belt-shaped metallic plate 153A and an upper belt-shaped metallic plate 153B. The lower belt-shaped metallic plate 153A has a roughly U shape opening to the upper side. The upper belt-shaped metallic plate 153B closes the opening of the lower belt-shaped metallic plate 153A. This configuration ensures that the width-direction circumferential part 153 width-directionally surrounds a vehicle longitudinal-directionally central portion of the battery 151 which has a roughly rectangular parallelepiped shape.

As shown in FIG. 17(a), specifically, a left end portion of the upper belt-shaped metallic plate 153B is bent to the lower side, and is fixed to an upper part of a left end portion of the lower belt-shaped metallic plate 153A. A right end portion of the upper belt-shaped metallic plate 153B is bent to the upper side, and is fixed to an upper part of a right end portion of the lower belt-shaped metallic plate 153A by a bolt 153C. In addition, the right end portion of the upper belt-shaped metallic plate 153B and the upper part of the right end portion of the lower belt-shaped metallic plate 153A are fixed, by the bolt 153C, to a battery stay right-side support part 167 (see FIG. 13 and the like) provided on the cross member 160.

As shown in FIGS. 13, 14 and 17 and the like, the vehicle longitudinal-direction circumferential part 154 has a rear belt-shaped metallic plate 154A and a front belt-shaped metallic plate 154B. The rear belt-shaped metallic plate 154A has a roughly U shape opening to the front side. The front belt-shaped metallic plate 154B closes the opening of the rear belt-shaped metallic plate 154A. This configuration ensures that the vehicle longitudinal-direction circumferential part 154 longitudinal-directionally surrounds a width-directionally central portion of the battery 151 having the roughly rectangular parallelepiped shape.

As shown in FIG. 14, specifically, a lower end portion of the front belt-shaped metallic plate 154B is engaged with a front end portion on the lower side of the rear belt-shaped metallic plate 154A. A front end portion on the upper side of the rear belt-shaped metallic plate 154A is bent to the upper side, and is fixed to an upper end portion of the front belt-shaped metallic plate 154B by a bolt 154C. A rear stay fixing part 154D projecting rearward is provided at a rear portion of the rear belt-shaped metallic plate 154A. The rear stay fixing part 154D is fixed, by a bolt 154E, to a battery fixing part 168A projecting forward from a lengthwise-directionally intermediate portion of the rear part stay 168.

As has been described above, the battery stay 152 is fixed to the rear part stay 168, and is fixed also to the battery stay right-side support part 167 as a fixing part provided on the seat rail 14 on the right side, which constitutes the other side of the seat rails 14. This configuration ensures that the battery stay 152 is so provided as to position the battery 151 in the front-rear direction and in the left-right direction. In addition, the lower surface of the battery 151 is in contact with the battery contact projections 696 provided as contact parts at the upper surface of the base part 691 of the rear fender 69. The battery 151 is disposed on the upper side of the rear fender 69.

Now, a carrier fastening structure of the motorcycle 1 will be described below referring to FIG. 1 and FIGS. 18 to 25.

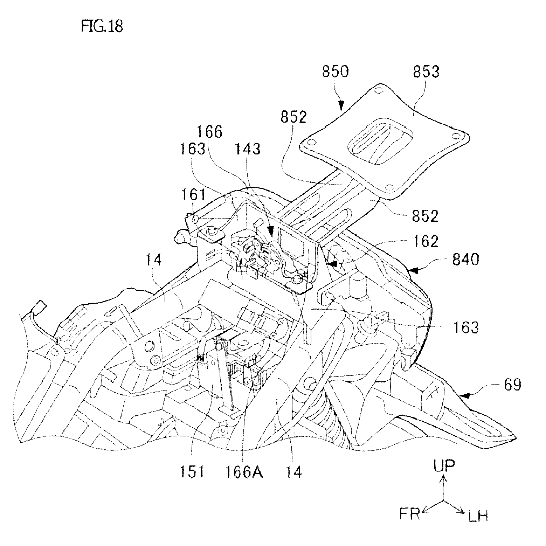

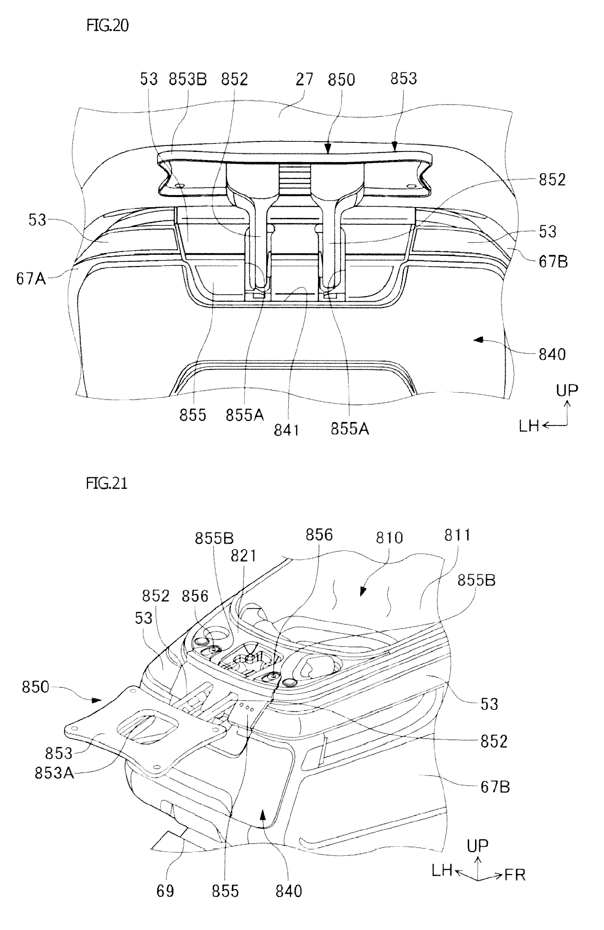

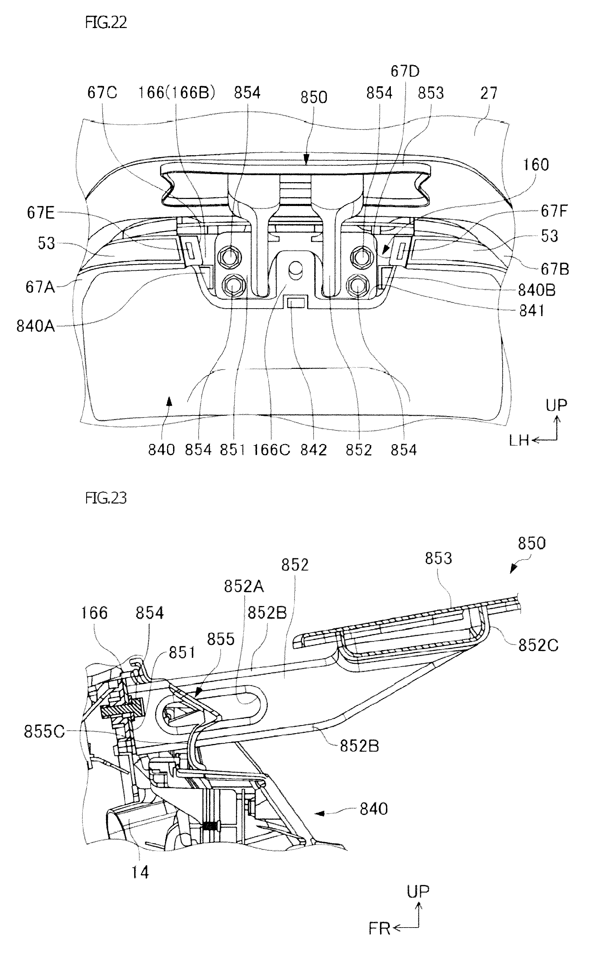

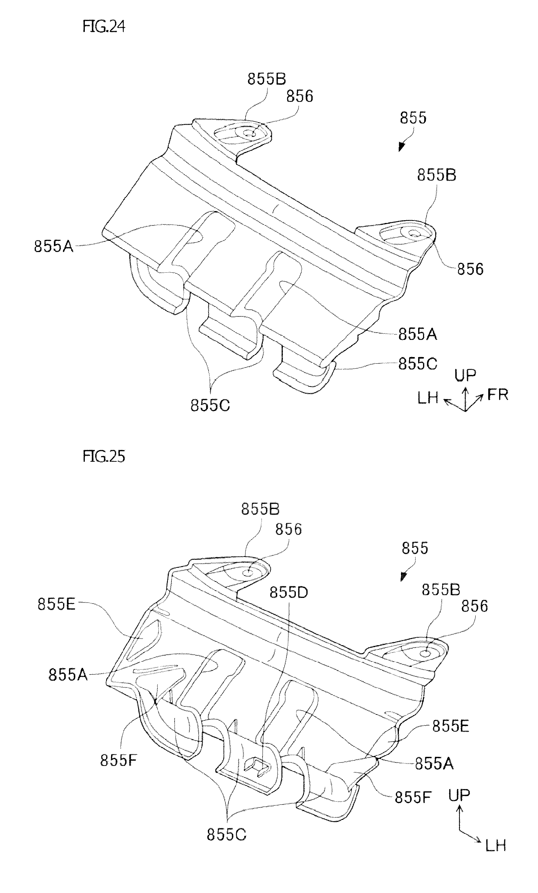

FIG. 18 is a perspective view showing a state wherein the seat 27, the rear side cover 67, the storage box 810 and the like have been detached from a rear portion of the motorcycle 1. FIG. 19 is a plan view showing the state wherein the seat 27, the rear side cover 67, the storage box 810 and the like have been detached from the rear portion of the motorcycle 1. FIG. 20 is a back elevation of the carrier 850 and its surroundings in the motorcycle 1. FIG. 21 is a perspective view showing a state wherein the seat 27 has been detached from a rear portion of the motorcycle 1. FIG. 22 is a back elevation showing a state wherein the rear center cover 855 has been detached from a rear portion of the motorcycle 1. FIG. 24 is an upper-side perspective view of the rear center cover 855 constituting the carrier fastening structure in the motorcycle 1. FIG. 25 is a lower-side perspective view of the rear center cover 855 constituting the carrier fastening structure in the motorcycle 1. FIG. 26 is a sectional view taken along line a-a of FIG. 2.

The carrier fastening structure of the motorcycle 1 includes the seat 27, the taillight unit 840, the rear side cover 67 as a rear cover, the carrier 850, and the seat rails 14.

As shown in FIG. 1, the taillight unit 840 is disposed at a rear portion of the motorcycle 1, and is electrically connected to the battery 151. The taillight unit 840 is so configured as to be assembled integrally with the left side part 67A of the rear side cover 67 and the right side part 67B of the rear side cover 67. In a process of manufacturing the motorcycle 1, after the storage box 810 is fixed to the seat rails 14 of the body frame 10, an assembly having the taillight unit 840 assembled integrally with the left side part 67A of the rear side cover 67 and the right side part 67B of the rear side cover 67 is mounted from above the storage box 810.

As shown in FIG. 20 and the like, the taillight unit 840 is roughly U-shaped in rear view. Specifically, the taillight unit 840 is provided at an upper portion thereof with a recess 841 which is recessed downward. In the longitudinal direction of the vehicle, the recess 841 faces a back surface of the plate-shaped rear surface part 166 of the cross member 160.

As shown in FIGS. 18 to 22, the carrier 850 includes a cross member fixing part 851, rear extension parts 852, and a rack part 853. As shown in FIG. 22, the cross member fixing part 851 has a roughly U-shaped plate-like form opening to the lower side, so as to avoid a fixing part 166C for fixation with the taillight unit 840 and the cross member 160. The cross member fixing part 851 makes surface contact, from the rear side, with the back surface 166B of the plate-like rear surface part 166 of the cross member 160 which faces the recess 841 of the taillight unit 840. When the cross member fixing part 851 is thus in the surface contact state, as shown in FIG. 22, both left and right end portions of the cross member fixing part 851 are fixed to the plate-shaped rear surface part 166 by two bolts 854 each, or a total of four bolts 854.

This ensures that the carrier 850 is disposed in the recess 841, and is fixed to the cross member 160. In addition, the recess 841 of the taillight unit 840 is located between the lower edge of a rear portion of the seat 27 and the upper edge of the taillight unit 840. Therefore, the carrier 850 is disposed between the lower edge of the rear portion of the seat 27 and the upper edge of the taillight unit 840. Specifically, the rear extension parts 852 constituting the carrier 850 are so provided as to pass through a space between the seat 27 and the taillight unit 840, in the recess 841.

The rear extension parts 852 extend rearward from the cross member fixing part 851. The rear extension parts 852 are in the shape of a pair of plates arranged in a positional relationship parallel to the vehicle width direction (left-right direction). Each of the rear extension parts 852 is formed in an intermediate portion thereof with a through-hole 852A in an elliptic shape elongated in the longitudinal direction of the vehicle. The rear extension part 852 is provided at upper end and lower end edges thereof with roughly horizontal edge parts 852B having surfaces parallel to the left-right direction. Upper parts of rear end portions of the rear extension parts 852 are provided with enlarged-width parts 852C enlarged in width in the left-right direction.

As shown in FIG. 19, the rack part 853 is in the shape of a plate which is roughly rectangular in plan view. The rack part 853 is integrally connected to the enlarged-width parts 852C of extension end portions of the rear extension parts 852 while having a substantially horizontal positional relationship with the enlarged-width parts 852C. As shown in FIG. 1, therefore, the carrier 850 is disposed rearwardly of the seat 27. As shown in FIG. 19, the rack part 853 is formed in its central portion (in plan view) with a through-hole 853A piercing therethrough in the vertical direction. The rack part 853 is provided at a peripheral edge portion thereof with a roughly vertical edge part 853B having a downwardly extending surface.

As seen from comparison of FIG. 22 with FIGS. 20 and 21, the cross member fixing part 851 is covered by the rear center cover 855. The rear center cover 855 is formed and fixed between the lower side of the seat 27 and the upper side of the taillight unit 840. A lower portion of the rear center cover 855 is disposed inside the recess 841. An upper portion of the rear center cover 855 is disposed on the upper side of the recess 841 and on the lower side of the seat 27.

As shown in FIGS. 24 and 25, the rear center cover 855 has a roughly comb-like shape with two grooves 855A. As shown in FIG. 20, the rear extension parts 852 are disposed in the grooves 855A. As shown in FIGS. 24 and 25, the rear center cover 855 has extension part fixing portions 855B. The extension part fixing portions 855B are provided at both left and right end parts of an upper end portion of the rear center cover 855. As shown in FIGS. 5 and 21, the rear center cover 855 is engaged with and fixed to rear end portions of the extension part 821 of the storage box 810, on the lower side of the seat 27, by the clips 856A. More specifically, the extension part fixing portions 855B extend forward, and, as shown in FIG. 21, clip locking parts 856 composed of through-holes are fixed to rear end portions of the extension part 821 of the storage box 810 by the clips 856A (see FIG. 6) provided at the rear end portions of the extension part 821 of the storage box 810.

In addition, as shown in FIGS. 24 and 25, the rear center cover 855 extends downwardly rearward. More specifically, as shown in FIG. 23, the rear center cover 855 obliquely extends rearwardly downward from a position corresponding to the upper ends of the rear extension parts 852, and is curved toward the front side from a position corresponding to roughly central positions of the rear extension parts 852 in the vertical direction. Specifically, a lower end portion of the rear center cover 855 has a curved surface 855C which is recessed by being curved toward the front side, or toward the inside of the motorcycle 1.

The curved surface 855C is shaped along the recess 841 formed in the taillight unit 840. As shown in FIG. 25, the rear center cover 855 is provided in a central part of a lower end portion thereof with a unit engaging projection 855D projecting forward. As shown in FIG. 25, the unit engaging projection 855D has a roughly U shape opening to the lower side. The unit engaging projection 855D is engaged with a rectangular parallelepiped-shaped hole 842 (see FIG. 22) formed in the center of the recess 841 of the taillight unit 840 in the left-right direction. By this configuration, the taillight unit 840 and the rear center cover 855 are engaged with each other.

Besides, as shown in FIG. 25, at vertical-directionally central portions of the rear center cover 855 which each interconnect the extension fixing part 855B and the curved surface 855C, rear side cover engaging projections 855E and side unit engaging projections 855F are provided to be integral with the rear center cover 855. The rear side cover engaging projections 855E have plate-like shapes extending forward from the vicinity of left and right end edges of the rear center cover 855. In addition, the side unit engaging projections 855F are located on the vehicle-width-directionally (left-right-directionally) inner side relative to the rear side cover engaging projections 855E, and each have a plate-like shape extending forward.

Divisional parts 67C and 67D (see FIG. 22) of the rear side cover 67 divided into the left side part 67A and the right side part 67B within the width-directional range of the taillight unit 840 are formed with engaging holes 67E and 67F, respectively. The rear side cover engaging projections 855E (see FIG. 25) are engaged with these engaging holes 67E and 67F. In addition, both left and right end parts of that portion of the taillight unit 840 which defines the recess 841 are formed with engaging holes 840A and 840B (see FIG. 22). The side unit engaging projections 855F (see FIG. 25) are engaged with these engaging holes 840A and 840B. By these engagements, the rear center cover 855 is fixed to the rear side cover 67 and the taillight unit 840. The unit engaging projection 855D, the rear side cover engaging projections 855E and the side unit engaging projections 855F constitute a rear center cover fixing part.

The rear side cover 67 is divided into the left side part 67A and the right side part 67B within the width-directional range of the taillight unit 840. The divisional parts 67C and 67D and the cross member fixing part 851 are covered by the rear center cover 855. Besides, with the rear center cover 855 removed, the cross member fixing part 851 (namely, that part of the carrier 850 which is fixed to the cross member 160) is exposed, and the portion where the rear side cover 67 is divided into the right side part 67B and the left side part 67A is exposed.

According to the rear fender support structure for a saddle type vehicle applied to the motorcycle 1 in the present embodiment as described above, the following effects are produced, for example.

In this embodiment, the rear fender support structure includes the battery stay 152 covering a part of the battery 151 and holding the battery 151. The battery stay 152 is fixed to the seat rails 14. Therefore, it becomes unnecessary to support the battery stay 152 by the rear fender 69. Accordingly, the strength and rigidity required for mounting the battery on the rear fender 69 can be reduced. Consequently, a reduction in the weight of the rear fender 69 can be contrived.

In the present embodiment, the rear fender 69 is fixed to the rear part stay 168 extending from the seat rails 14. In addition, the battery stay 152 is fixed to the rear part stay 168. Therefore, instead of reinforcing the rear part stay 168 and supporting the battery 151 thereby, it is possible to reinforce the rear part stay 168 with the battery stay 152. Accordingly, a reduction in the weight of the rear part stay 168 can be realized.

In this embodiment, the rear part stay 168 is connected to the cross member 160 provided at a rear portion to mutually fasten the seat rails 14 formed in a left-right pair, and is provided at the vehicle-width-directional center. Therefore, the rear fender 69 can be fixed while securing a left-right balance by the rear part stay 168 which is provided in the vehicle-width-directional center. As a result, it is possible to reduce the number of locations where the rear fender 69 is fixed, and to enhance productivity.

In the present embodiment, the battery stay 152 is so provided as to position the battery 151 in the front-rear direction and in the left-right direction. Besides, the rear fender 69 has the battery contact projections 696 as contact parts for contact with the lower surface of the battery 151. Therefore, it is possible to bear only the downward load of the battery 151 by the rear fender 69, to bear front-rear-directional and left-right-directional loads by the battery stay 152, and thereby to share the load of the battery 151 between the rear fender 69 and the battery stay 152. Accordingly, it is possible to contrive optimization of the rigidities of the battery stay 152 and the rear fender 69, and to achieve a reduction in the overall weight.

In this embodiment, the seat rails 14 are formed in a left-right pair. In addition, the upper end support bracket 141 as a cushion support part which supports the rear cushion 26 supporting the rear wheel WR elastically is provided on one side of the seat rails 14. Further, the battery stay right-side support part 167 as a fixing part for fixing the battery stay 152 is provided on the other side of the seat rails 14. Therefore, it is possible to bear loads by the pair of left and right seat rails 14 in a sharing manner. Accordingly, while optimizing the rigidity balance as to the seat rails 14, it is possible to fix accessories through utilizing the respective rigidities of them. Consequently, a reduction in weight can be contrived while realizing enhanced vehicle performance.

In the present embodiment, the seat rails 14 are formed to extend upward and rearward. In addition, the front portion of the rear fender 69 is fastened to the seat rails 14 on both left and right sides. Therefore, both left and right sides of the rear fender 69 can be fixed by fastening them to the seat rails 14 at a low level of the seat rails 14. This permits a fastening member or members to be formed without enlargement in size. As a result, a reduction in weight can be promised.

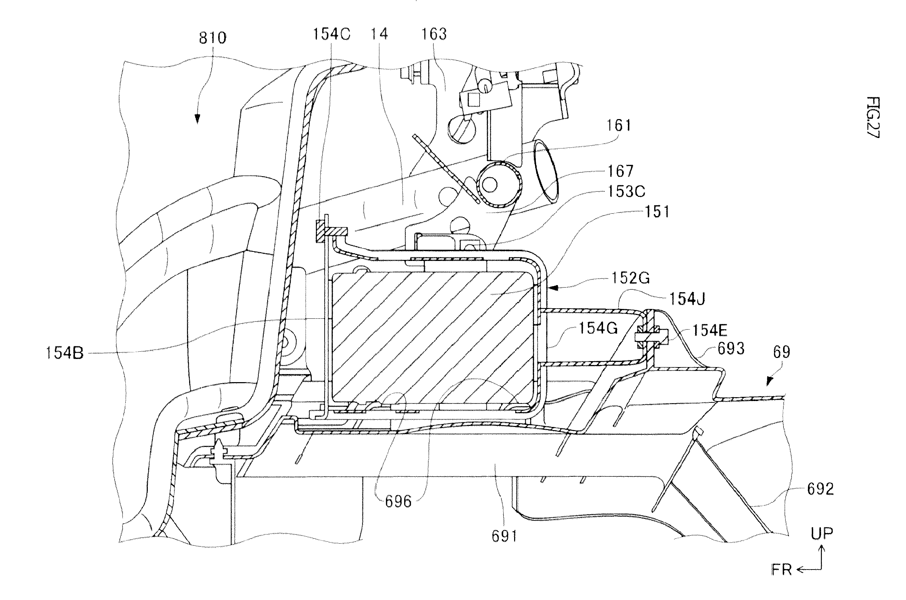

Now, a second embodiment of the case wherein the present invention is applied to a scooter type motorcycle will be described below referring to FIG. 27. The second embodiment differs from the first embodiment in that in the second embodiment a rear fender 69 is supported by a battery stay 152G, and a rear part support part 154J is provided in place of the rear part stay 168 adopted in the first embodiment. In the other points of configuration, the second embodiment is the same as the first embodiment. Therefore, the same configurations as those in the first embodiment above can offer the same effects as above. The same members as those in the first embodiment above will be denoted by the same reference symbols as used above, and their descriptions will be omitted.

The battery stay 152G has a rear belt-shaped metallic plate 154G, in place of the rear belt-shaped metallic plate 154A used in the first embodiment. In the other points of configuration, the battery stay 152G is the same as the battery stay 152 in the first embodiment. The rear part support part 154J in a U-shaped form opening toward the front side is integrally connected to the rear belt-shaped metallic plate 154G. A rear portion of the rear part support part 154J is fastened to a rear part stay joint portion 693 by a bolt 154E. As a result, a rear portion of a base part 691 of the rear fender 69 is supported on a body frame 10 by the battery stay 152G.

According to the rear fender support structure for a saddle type vehicle applied to the motorcycle in the second embodiment as described above, the following effects are produced, for example.

In this embodiment, the rear portion of the base part 691 is fastened to the battery stay 152G. Therefore, the rear part stay 168 provided in the first embodiment for fixing a rear portion of the base part 691 is unnecessitated in this embodiment. Consequently, since any rear part stay 168 for fixing a rear portion of the base part 691 is not provided, weight can be reduced that much.

While preferred embodiments of the present invention have been described above, the invention is not restricted to the above embodiments but can be carried out in various modes. For instance, while a configuration in which the pair of seat rails 14 are provided under the seat 27 and support the seat 27 indirectly through the storage box 810 and the like has been adopted in the present embodiments, this configuration is not restrictive. For example, the pair of seat rails may support the seat directly.

Besides, while the battery stay 152 has covered a part of the battery 151 in the present embodiments, this configuration is not restrictive. For instance, the battery stay 152 may cover the whole part of the battery 151.

In addition, while an example in which the present invention is applied to a motorcycle operated to travel by rotationally driving a rear wheel by power generated by an engine (internal combustion engine) has been described in the above embodiments, this is not restrictive of application of the invention. Specifically, the present invention is applicable to a motor-driven two-wheeled vehicle operated to travel by rotationally driving a rear wheel by only power generated by an electric motor. Besides, the invention can be applied to a hybrid type saddle type vehicle operated to run by rotationally driving a rear wheel by a combination of power generated by an engine and power generated by an electric motor.

Furthermore, the present invention is applicable not only to scooter type saddle type vehicles but also to motorcycle type and cab-over type saddle type vehicles, insofar as the saddle type vehicles have a seat on which the rider is seated. In addition, the invention is applicable to three-wheeled and four-wheeled saddle type vehicles insofar as the saddle type vehicles have a seat on which the rider is seated. In short, the saddle type vehicle generally includes those vehicles on which the rider is seated astride the vehicle body.

### Description of Reference Symbols

- 1: Motorcycle (Saddle type vehicle)
- 10: Body frame (Main frame)
- 14: Seat rail
- 27: Seat
- 69: Rear fender
- 151: Battery
- 152, 152G: Battery stay
- 168: Rear part stay
- 691: Base part
- 692: Rear extension part
- 160: Cross member
- 696: Battery contact projection (Contact part)
- 26: Rear cushion
- 141: Upper end support bracket (Cushion support part)
- 167: Battery stay right-side support part (Fixing part)
- WR: Rear wheel

## Claims

1. A rear fender support structure for a saddle type vehicle which includes
seat rails (14) forming a rear portion of a body frame (10), the seat rails (14) supporting a seat (27) either directly or indirectly,
a rear fender (69) covering at least an upper side of a rear wheel (WR), and
a battery (151) disposed on an upper side of the rear fender (69), the rear fender support structure comprising
a battery stay (152) covering at least a part of the battery (151), the battery stay (152) holding the battery (151);
the battery stay (152) being fixed to the seat rails (14).

2. The rear fender support structure for the saddle type vehicle according to claim 1,
wherein the rear fender (69) is fixed to a rear part stay (168) extending from the seat rails (14), and
the battery stay (152) is fixed to the rear part stay (168).

3. The rear fender support structure for the saddle type vehicle according to claim 1,
wherein the rear fender (69) includes a base part (691), and a rear extension part (692) extending from the base part (691), the rear extension part (692) functioning as a mudguard, and
a rear portion of the base part (691) is fastened to the battery stay (152G).

4. The rear fender support structure for the saddle type vehicle according to claim 2, wherein the rear part stay (168) is connected to a cross member (160) provided at a rear portion to mutually fasten the seat rails (14) formed in a left-right pair, and is provided at a vehicle-width-directional center.

5. The rear fender support structure for the saddle type vehicle according to any of claims 1, 2 and 4,
wherein the battery stay (152) is so provided as to position the battery (151) in a front-rear direction and in a left-right direction, and
the rear fender (69) has a contact part (696) making contact with a lower surface of the battery (151).

6. The rear fender support structure for the saddle type vehicle according to any of claims 1, 2, 4 and 5, wherein the seat rails (14) are formed in a left-right pair, a cushion support part (141) which supports a rear cushion (26) supporting the rear wheel (WR) elastically is provided on one side of the seat rails (14), and a fixing part (167) for fixing the battery stay (152) is provided on the other side of the seat rails (14).

7. The rear fender support structure for the saddle type vehicle according to any of claims 1 to 6, wherein the seat rails (14) are formed to extend upward and rearward, and a front portion of the rear fender (69) is fastened to the seat rails (14) on both left and right sides.
